Europäisches Patentamt

(19) European Patent Office

Office européen des brevets

(11) Veröffentlichungsnummer: **0 051 141**
**B1**

(12) **EUROPÄISCHE PATENTSCHRIFT**

(45) Veröffentlichungstag der Patentschrift:
10.10.84

(51) Int. Cl.³: **H 04 L 25/52, H 04 L 25/38**

(21) Anmeldenummer: 81107419.4

(22) Anmeldetag: 18.09.81

(54) **Verfahren und Einrichtung zur Entzerrung binärer Empfangssignale.**

(30) Priorität: 04.11.80 CH 8177/80

(43) Veröffentlichungstag der Anmeldung:
12.05.82 Patentblatt 82/19

(45) Bekanntmachung des Hinweises auf die Patenterteilung:
10.10.84 Patentblatt 84/41

(84) Benannte Vertragsstaaten:
AT BE FR GB NL SE

(56) Entgegenhaltungen:
CH - A - 466 374
FR - A - 2 101 286
US - A - 3 404 232
US - A - 3 459 964
US - A - 3 493 874
US - A - 4 163 209

PATENT ABSTRACTS OF JAPAN, Band 1, Heft 41, 13.
September 1977, Seite 3281 E 77
PHILIPS TELECOMMUNICATION REVIEW, Band 17,
Heft 3, Januar 1957, HILVERSUM (NL) J.W. COHEN et
al.: "Calculations on a method for signal testing", Seiten
81-89

(73) Patentinhaber: LGZ LANDIS & GYR ZUG AG,
CH-6301 Zug (CH)

(72) Erfinder: Thomas, Schaub, Gotthardstrasse 44,
CH-8800 Thalwil (CH)

(74) Vertreter: Müller, Hans-Jürgen, Dipl.-Ing. et al, Müller,
Schupfner & Gauger
Lucile-Grahn-Strasse 38 Postfach 80 13 69,
D-8000 München 80 (DE)

**Beschreibung**

## Anwendungsgebiet und Zweck

Die Erfindung bezieht sich auf ein Verfahren und eine Einrichtung zur Entzerrung eines aus einem binären Impulstelegramm bestehenden Empfangssignals mit Hilfe eines Schwellwertvergleichs. Binäre Empfangssignale werden in der Regel mit Hilfe eines konstanten Schwellwertes ausgewertet. Ist das Empfangssignal gleich oder größer als der Schwellwert, so gilt als Empfangswert logisch »1«. Ist es dagegen kleiner als der Schwellwert, so gilt als Empfangswert logisch »0«. Ist das Empfangssignal infolge von Störsignalen und Verformungen im Übertragungskanal stark deformiert, führt diese Vorgehensweise zu falschen und unzulässigen Auswerteresultaten. Um dies zu vermeiden, muß das deformierte Empfangssignal entzerrt werden.

## Stand der Technik

Bekannt ist aus der US-PS 4 109 211 eine Methode der langsamen Schwellwertanpassung, welche dem Empfänger erlaubt, sich über längere Zeit gesehen den langsamen Änderungen des Empfangssignals anzupassen, welche bedingt sind durch langsame Änderungen der Übertragungsverhältnisse des Übertragungskanals.

Darüber hinaus ist auch ein Abtast- und Schwellwert-Vergleichsverfahren bekannt (US-PS 3 493 874), bei dem von einem Komparator in Verbindung mit einer Halte-Schaltung Gebrauch gemacht wird. Dabei ist während einer Bitdauer T 2 nur ein Schwellwert vorhanden, der langfristig durch einen Integrator und Rückkopplung zur Mittelwertbildung angepaßt wird.

## Aufgabe und Lösung

Der Erfindung liegt die Aufgabe zugrunde, deformierte binäre Empfangssignale zu entzerren, so daß zur weiteren Auswertung wieder ideale rechteckförmige binäre Signale zur Verfügung stehen.

Diese Aufgabe wird erfindungsgemäß durch die im Kennzeichen des Patentanspruchs 1 angegebenen Merkmale gelöst.

Vorteile dieser Lösung sind, daß der unter Verwendung bekannter Bausteine der Elektronik, aber ohne Verwendung teurer Filter aufgebaute Eingangsteil des Empfängers dem nicht idealen Verhalten des Übertragungskanals entgegenwirkt und die Folgen dieses Verhaltens, ohne dessen Ursachen zu kennen, wieder rückgängig macht, so daß für die weitere Auswertung wieder klassische Mittel der Digitaltechnik verwendbar sind. Von Vorteil ist auch die Möglichkeit, die Schaltung auf einfache Art und Weise erweitern zu können, so daß langsame Änderungen im Verhalten des Übertragungskanals automatisch erfaßt und berücksichtigt werden, wobei im Gegensatz zum Stand der Technik keine Mittelwerte, sondern nur Häufigkeiten zu ermitteln sind. Ein weiterer Vorteil ist, daß die Schaltung sowohl in Analog- als auch in Digital-Technik ausführbar ist.

## Beschreibung

Ausführungsbeispiele der Erfindung sind in der Zeichnung dargestellt und werden im folgenden näher beschrieben.

Es zeigt

Fig. 1 ein Blockschaltbild eines Übertragungssystems,

Fig. 2 ein Blockschaltbild eines Entzerrers mit einer Erweiterungs-Schaltung,

Fig. 3 ein Blockschaltbild eines digitalen ersten zyklischen Speichers,

Fig. 4 ein Schaltbild eines digitalen k-Bit Umschalters und

Fig. 5 Zeitfunktionen verschiedener Signale.

Gleiche Bezugszahlen bezeichnen in allen Figuren der Zeichnung das gleiche Bauelement.

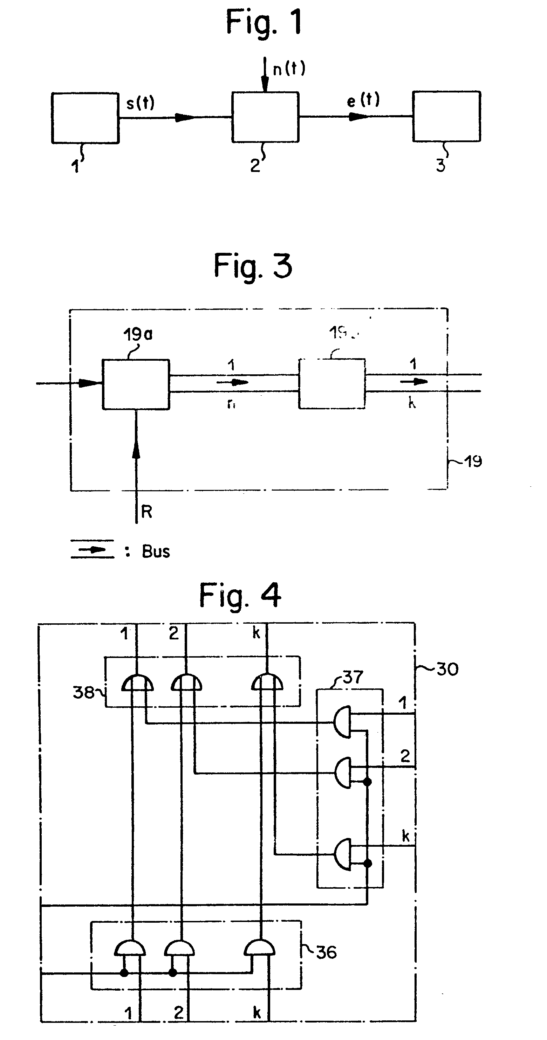

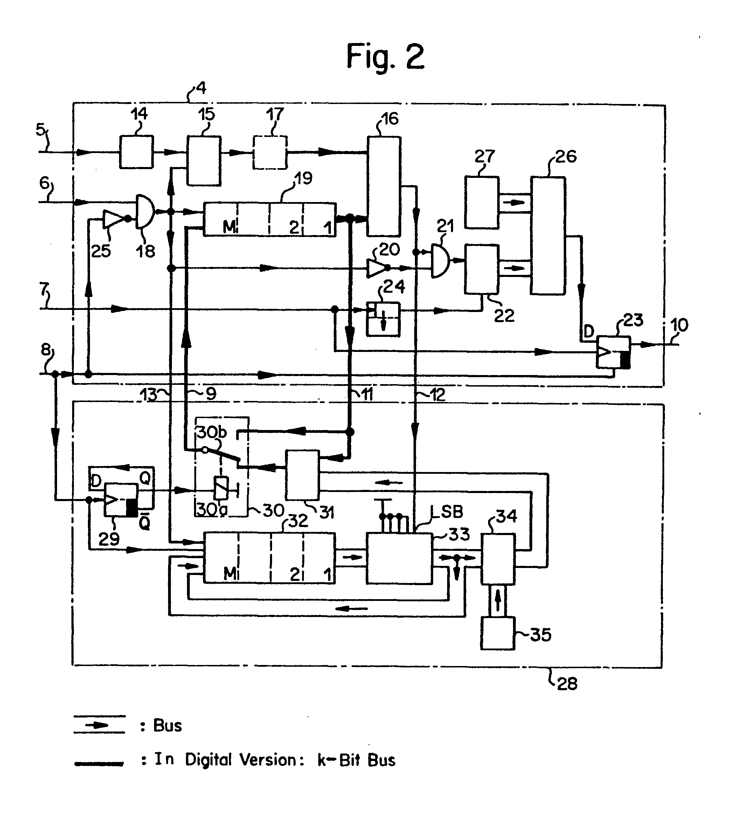

Das in der Fig. 1 dargestellte Übertragungssystem enthält einen Sender 1, welcher über einen Übertragungskanal 2 mit einem Empfänger 3 verbunden ist.

Ein in der Fig. 2 dargestellter Entzerrer 4 besitzt einen Signaleingang 5, einen ersten Takteingang 6, einen zweiten Takteingang 7, einen dritten Takteingang 8, einen Schwellwerteingang 9, einen Signalausgang 10, einen Schwellwertausgang 11, einen Zählausgang 12 und einen Taktausgang 13.

Mittels einer Ein-Draht-Verbindung sind verbunden:

— Der Signaleingang 5 mit dem Eingang eines Demodulators 14, falls das Sendesignal moduliert ist, ansonsten mit dem Abtasteingang einer Abtast/Halte-Schaltung 15.

— Der Ausgang des Demodulators 14, falls vorhanden, mit dem Abtasteingang der Abtast/Halte-Schaltung 15.

— Der Ausgang der Abtast/Halte-Schaltung 15 in der Analog-Version mit einem ersten Eingang eines ersten Komparators 16 und in der Digital-Version mit dem Eingang eines A/D-Wandlers (Analog/Digital-Wandler) 17.

— Der erste Takteingang 6 mit einem ersten Eingang eines ersten Und-Gatters 18.

— Der Ausgang des ersten Und-Gatters 18 mit dem Steuereingang der Abtast/Halte-Schaltung 15, dem Takteingang eines ersten zyklischen Speichers 19, dem Eingang eines ersten Inverters 20 und dem Taktausgang 13.

— Der Ausgang des ersten Komparators 16 mit einem ersten Eingang eines zweiten Und-Gatters 21 und dem Zählausgang 12.

— Der Ausgang des ersten Inverters 20 mit dem zweiten Eingang des zweiten Und-Gatters 21.

— Der Ausgang des zweiten Und-Gatters 21 mit dem Takteingang eines m-Bit Zählers 22.

— Der zweite Takteingang 7 mit dem Takteingang eines ersten D-Flip Flop 23 und dem Steuereingang eines monostabilen Multivibrators 24.

— Der dritte Takteingang 8 mit dem Eingang eines zweiten Inverters 25 und dem Rückstelleingang des ersten D-Flip Flop 23.

— Der Ausgang des zweiten Inverters 25 mit dem zweiten Eingang des ersten Und-Gatters 18.

— Der Ausgang des monostabilen Multivibrators 24 mit dem Rückstelleingang des m-Bit Zählers 22.

— Der Ausgang eines digitalen zweiten Komparators 26 mit dem D-Eingang des ersten D-Flip Flop 23.

— Der Ausgang des ersten D-Flip Flop 23 mit dem Signalausgang 10.

Je ein m-Bit Bus verbindet den Ausgang eines m-Bit Speichers 27 mit einem ersten m-Bit Eingang des zweiten Komparators 26 und den Ausgang des m-Bit Zählers 22 mit dem zweiten m-Bit Eingang des zweiten Komparators 26.

In der Analog-Version sind mit einer Ein-Draht Verbindung und in der Digital-Version mit einer k-Bit Bus-Verbindung verbunden:

— Der Ausgang des ersten zyklischen Speichers 19 mit dem zweiten Eingang des ersten Komparators 16 und dem Schwellwertausgang 11.

— Der Schwellwerteingang 9 mit dem seriellen Dateneingang des ersten zyklischen Speichers 19.

— Der Ausgang des A/D-Wandlers 17, falls vorhanden, mit dem ersten Eingang des ersten Komparators 16.

— Der Schwellwertausgang 11 mit dem Schwellwerteingang 9, falls eine Erweiterungs-Schaltung 28 nicht verwendet wird.

Die Erweiterungs-Schaltung 28 in der Fig. 2 enthält einen zweiten D-Flip Flop 29, einen Umschalter 30, der z. B. aus einem Umschaltrelais besteht, einen Schwellwertrechner 31, einen zweiten zyklischen Speicher 32, eine Additionsschaltung 33, eine Subtraktionsschaltung 34 und einen h-Bit Speicher 35.

Ein-Draht Verbindungen sind im weiteren vorhanden zwischen:

— dem dritten Takteingang 8, dem Takteingang des zweiten D-Flip Flop 29 und dem Rückstelleingang des zweiten zyklischen Speichers 32.

— dem Q̄-Ausgang des zweiten D-Flip Flop 29 und seinem D-Eingang.

— dem Q̄-Ausgang des zweiten D-Flip Flop 29 und einer Klemme einer Relaisspule 30a des Umschalters 30, während die andere Klemme der Relaisspule 30a an Masse liegt.

— dem Taktausgang 13 und dem Takteingang des zweiten zyklischen Speichers 32.

— dem Zählausgang 12 und dem LSB (»Least significant bit« = Niedrigwertiges Bit)-Anschluß eines ersten h-Bit Einganges der Additionsschaltung 33, während die restlichen Bit-Anschlüsse dieses ersten h-Bit Einganges an Masse liegen.

Je eine h-Bit Bus-Verbindung existiert zwischen:

— dem h-Bit Ausgang des zweiten zyklischen Speichers 32 und dem zweiten h-Bit Eingang der Additionsschaltung 33.

— dem h-Bit Ausgang der Additionsschaltung 33 und einem ersten h-Bit Eingang der Subtraktionsschaltung 34 sowie dem seriellen h-Bit Dateneingang des zweiten zyklischen Speichers 32.

— dem h-Bit Ausgang des h-Bit Speichers 35 und dem zweiten h-Bit Eingang der Subtraktionsschaltung 34.

— dem h-Bit Ausgang der Subtraktionsschaltung 34 und einem h-Bit ersten Eingang des Schwellwertrechners 31.

In der Analog-Version sind mit einer Ein-Draht Verbindung und in der Digital-Version mit einer k-Bit Bus-Verbindung verbunden:

— Der Schwellwertausgang 11 mit dem (den) Schließkontakt(en) des Umschalters 30 und einem

3

zweiten Eingang des Schwellwertrechners 31.
— Der Ausgang des Schwellwertrechners 31 mit dem (den) Öffnungskontakt(en) des Umschalters 30.
— Der Schwellwerteingang 9 mit dem (den) Schaltarm(en) des Umschalters 30.

Wie bereits angedeutet, kann die Schaltung nach Fig. 2 sowohl in Analog- als auch in Digital-Version ausgeführt werden. In der Digital-Version ist der erste Komparator 16 ein Digital-Komparator und der erste zyklische Speicher 19 ein Digitalspeicher mit k Bit pro Zelle. Beide zyklischen Speicher 19 und 32 besitzen je M Zellen und bestehen in der Digital-Version vorteilhafterweise aus je k M-zelligen Schieberegistern, deren Takteingänge und deren Rückstelleingänge jeweils unter sich miteinander verbunden sind. Für den ersten zyklischen Speicher 19 kann auch eine Schaltung nach Fig. 3 verwendet werden. Der Umschalter 30 besitzt in der Digital-Version k Umschaltkontakte 30b, weshalb in diesem Fall vorteilhafterweise statt eines Umschaltrelais ein digitaler Umschalter nach Fig. 4 verwendet wird.

In der Analog-Version ist der erste Komparator 16 ein Analog-Komparator und der erste zyklische Speicher 19 ein Analogspeicher, für welchen vorteilhafterweise ein sogenanntes CCD (»Charge coupled device«)-Schieberegister verwendet wird. Der A/D-Wandler 17 ist hier wegzulassen und daher in der Fig. 2 gestrichelt dargestellt. Die anderen Bauelemente, mit Ausnahme des Schwellwertrechners 31 sind gleich wie in der Digital-Version. Statt einem Umschaltrelais kann auch ein Analog-Halbleiterschalter z. B. in CMOS-Technologie als Umschalter 30 verwendet werden.

Der in der Fig. 3 dargestellte digitale erste zyklische Speicher 19 besteht aus einem n-Bit Zähler 19a, welcher über einen n-Bit Bus mit den Adreßeingängen eines programmierbaren Festwertspeichers (PROM) 19b verbunden ist. Der k-Bit Ausgang des programmierbaren Festwertspeichers 19b ist gleichzeitig der Ausgang des ersten zyklischen Speichers 19. Der n-Bit Zähler 19a besitzt neben dem bereits in der Beschreibung der Fig. 2 erwähnten, mit dem Ausgang des ersten Und-Gatters 18 zu verbindenden Uhreneingang noch einen zusätzlichen, in der Fig. 2 nicht gezeichneten und mit dem Ausgang des monostabilen Miltivibrators 24 zu verbindenden Rückstelleingang R. Ein serieller k-Bit Dateneingang ist hier dagegen nicht vorhanden und somit auch kein Schwellwerteingang 9. Damit ist auch der Schwellwertausgang 11 überflüssig.

Der Entzerrer 4 kann in diesem Falle nicht mehr mit Hilfe der Erweiterungs-Schaltung 28 erweitert werden. Um dies zu vermeiden, ist der programmierbare Festwertspeicher (PROM) 19b durch einen Schreib/Lese-Speicher (RAM) zu ersetzen.

Der in der Fig. 4 dargestellte digitale k-Bit Umschalter 30 besteht aus einer ersten »Und-Gatter«-Gruppe 36, einer zweiten »Und-Gatter«-Gruppe 37 und einer »Oder-Gatter«-Gruppe 38. Jede der drei Gruppen enthält k Gatter und jedes Gatter besitzt 2 Eingänge. Der Q-Ausgang des zweiten D-Flip Flop 29 (Fig. 2) ist mit dem ersten Eingang aller k Gatter der zweiten »Und-Gatter«-Gruppe 37 und sein Q̄-Ausgang mit dem ersten Eingang aller k Gatter der ersten »Und-Gatter«-Gruppe 36 zu verbinden. Der Ausgang eines jeden Gatters der ersten »Und-Gatter«-Gruppe 36 ist auf einen ersten Eingang eines zugehörigen Oder-Gatters der »Oder-Gatter«-Gruppe 38 und der Ausgang eines jeden Gatters der zweiten »Und-Gatter«-Gruppe 37 auf den zweiten Eingang des zugehörigen Oder-Gatters der »Oder-Gatter«-Gruppe 38 geführt.

Mit einer k-Bit Bus-Verbindung sind nach Fig. 2 zu verbinden:

— Die k zweiten Eingänge der ersten »Und-Gatter«-Gruppe 36 mit dem in diesem Fall k-Bit Ausgang des Schwellwertrechners 31.
— Die k zweiten Eingänge der zweiten »Und-Gatter«-Gruppe 37 mit dem in diesem Fall k-Bit Schwellwertausgang 11 und dem in diesem Fall k-Bit zweiten Eingang des Schwellwertrechners 31.
— Die k Ausgänge der »Oder-Gatter«-Gruppe 38 mit dem in diesem Fall k-Bit Schwellwerteingang 9.

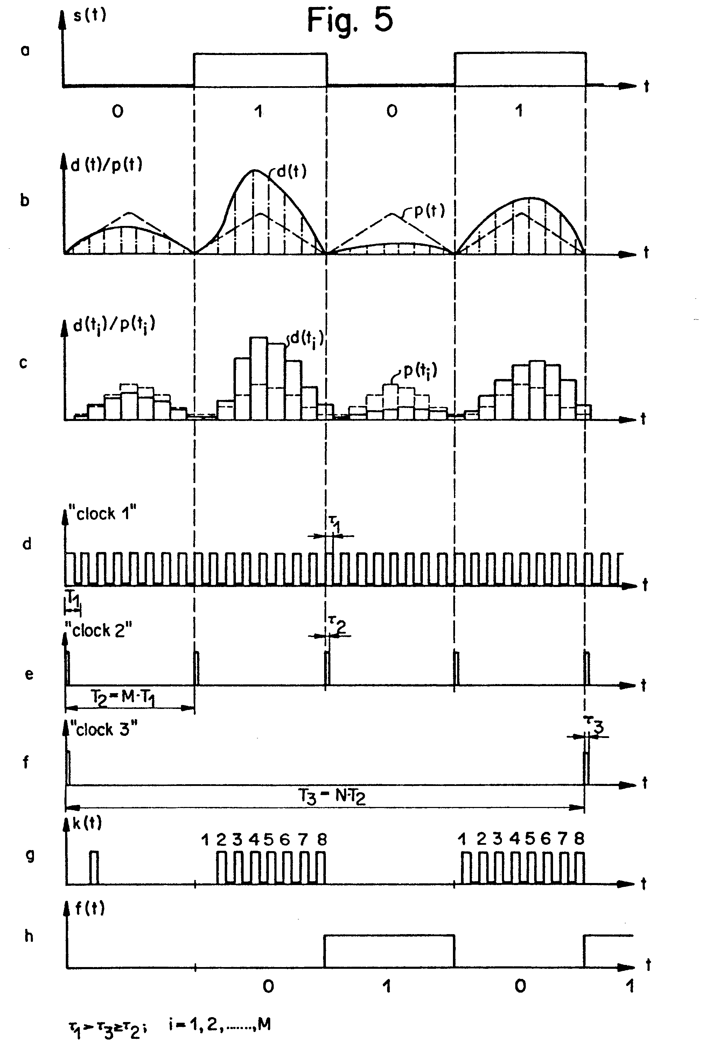

In der Fig. 5 sind dargestellt:

Auf Linie a:
Ein als ideal rechteckförmig angenommenes Impulstelegramm 0101, welches als Sendesignal $s(t)$ am Ausgang des Senders 1 ansteht wenn kein Modulator vorhanden ist und allgemein aus N Bit der Bitdauer $T_2$ besteht. Die Impulstelegrammdauer beträgt $T_3 = N \cdot T_2$. In der Fig. 5 wurde $N = 4$ gewählt.

Auf Linie b:
Ein als glockenförmig angenommenes, deformiertes und, falls das Sendesignal $s(t)$ moduliert ist, demoduliertes Empfangssignal $d(t)$ am Eingang der Abtast/Halte-Schaltung 15. Gestrichelt und ebenfalls glockenförmig ist die Schwellwertfunktion $p(t)$ dargestellt, unter der Annahme, daß der Schwellwert innerhalb eines Bit variabel ist und daß die Schwellwertfunktion für alle Bit gleich ist.

Auf Linie c:
Treppenförmige Kennlinien, die pro Bitdauer $T_2$ aus M diskreten Abtastwerten $d(t_i)$ des demodulierten Empfangssignal $d(t)$ bzw. aus M gestrichelt gezeichneten diskreten Schwellwerten $p(t_i)$ der Schwellwertfunktion $p(t)$ bestehen. M stellt die ganzzahlige Anzahl Abtastungen pro Bitdauer $T_2$ dar und es gilt $i = 1, 2, \ldots, M$.

Auf Linie d:

Ein rechteckförmiges Abtast-Taktsignal »Clock 1« der Periode $T_1$ und der Impulsdauer $\tau_1$ mit $T_1 = T_2/M$. In der Fig. 5 wurde $M = 8$ gewählt.

Auf Linie e:

Ein rechteckförmiges Bit-Taktsignal »Clock 2« der Periode $T_2$ und der Impulsdauer $\tau_2$.

Auf Linie f:

Ein rechteckförmiges Telegramm-Taktsignal der Periode $T_3$ und der Impulsdauer $\tau_3$.

Auf Linie g:

Das Ausgangssignal k(t) des zweiten Und-Gatters 21.

Auf Linie h:

Das entzerrte Empfangssignal f(t) am Ausgang des Entzerrers 4.

Es gilt: $\tau_1 > \tau_3 \geq \tau_2$.

Funktionsbeschreibung

Selbst unter Annahme eines idealen, rechteckförmigen Sendesignals im Sender vor dem Modulator wird das Empfangssignal e(t) am Signaleingang 5, bedingt durch Verformungen und diverses Störsignale n(t) in Übertragungskanal 2, in der Regel stark deformiert sein. Das Empfangssignal e(t) wird, falls das Sendesignal s(t) moduliert ist, im Demodulator 14 demoduliert, so daß am Eingang der Abtast/Halte-Schaltung 15 das deformierte, z. B. glockenförmige, demodulierte Empfangssignal d(t) erscheint (Fig. 5, Linie b). Dieses demodulierte Empfangssignal d(t) ist nun zu vergleichen mit einem Schwellwert, welcher erfindungsgemäß nicht konstant, sondern innerhalb einer Bitdauer $T_2$ variabel mit der Zeit gewählt wird. Diese Schwellwertfunktion kann über die relativ kurze Telegrammdauer $T_3$ für alle Bit des Impulstelegrammes als gleich, z. B. glockenförmig, angenommen werden. Die für das gesamte Impulstelegramm geltende Schwellwertfunktion p(t) ist in der Fig. 5, Linie b, gestrichelt dargestellt.

Vorteilhafterweise wandelt man vor dem Vergleich das demodulierte Empfangssignal d(t) mit Hilfe der Abtast/Halte-Schaltung 15 und des Abtast-Taktsignals »Clock 1« in ein treppenförmiges Empfangssignal um, das aus einer Reihe zeitdiskreter Abtastwerte $d(t_i)$, mit $i = 1,2 \ldots$, M besteht, wobei M eine ganze Zahl ist und die Anzahl Abtastungen pro Bitdauer $T_2$ darstellt (Fig. 5, Linie c). Als Schwellwertfunktion p(t) gilt dann ebenfalls eine treppenförmige und in der Fig. 5, Linie c, gestrichelt dargestellte Kennlinie, bestehend aus einer Reihe diskreter Schwellwerte $p(t_i)$, mit $i = 1,2, \ldots$, M. Die M diskreten Schwellwerte $p(t_i)$ pro Bitdauer $T_2$ sind in den M Zellen des ersten zyklischen Speichers 19 abgespeichert. Der Komparator 16 vergleicht nun den am Ausgang der Abtast/Halte-Schaltung 15 anstehenden, momentan geltenden Abtastwert $d(t_i)$ mit dem zugehörigen, in der letzten, in der Fig. 2 rechten Zelle des zyklischen Speichers 19 abgespeicherten diskreten Schwellwert $p(t_i)$.

Beim Empfang des ersten Bit des Impulstelegramms, welches als Startimpuls gilt, werden alle drei Taktsignale synchron zum Impulstelegramm gestartet. Die Erzeugung der auch unter sich synchronen Uhrensignale geschieht mittels bekannter Methoden der Digitaltechnik und wird hier weder beschrieben noch in der Fig. 2 zeichnerisch dargestellt, da sie nicht Gegenstand eines Schutzanspruchs ist. Das Abtast-Taktsignal »Clock 1« erreicht vom Takteingang 6 aus über das Und-Gatter 18 den Steuereingang der Abtast/Halte-Schaltung 15, so daß das demodulierte Empfangssignal d(t) während der Impulsdauer $\tau_1$ des Abtast-Taktsignals »Clock 1« abgetastet und anschließend der Abtastwert während der Impulslücke des Abtast-Taktsignals »Clock 1« gehalten und auf den Ausgang der Abtast/Halte-Schaltung 15 durchgeschaltet wird. Das Und-Gatter 18 dient nur dazu, den ersten Impuls des Abtast-Taktsignals »Clock 1« mit Hilfe des Inverters 25 um den Wert $\tau_3$ zu verzögern und so dem rechteckförmigen Telegramm-Taktsignal »Clock 3« Gelegenheit zu geben, zu Beginn des Impulstelegramms vom Takteingang 8 aus den D-Flip Flop 23 und, falls vorhanden, den zyklischen Speicher 32 auf Null zurückzustellen. Erst nach Ablauf der Impulsdauer $\tau_3$ gibt das Telegramm-Taktsignal »Clock 3«, welches für den Rest der Telegrammdauer Null ist, über den Inverter 25 das Und-Gatter 18 für das Abtast-Taktsignal »Clock 1« frei, so daß dessen verbleibender Rest — der um den Wert $\tau_3$ verkürzte erste Taktimpuls und alle nachfolgenden Impulse — den Ausgang des Und-Gatters 18 erreichen kann. Bedingung für ein korrektes Funktionieren ist, daß $\tau_1 > \tau_3$ ist. Da die Bitdauer $T_2 = M \cdot T_1$ ist, wird das demodulierte Empfangssignal d(t) während einer Bitdauer $T_2$ M mal abgetastet. Das Ausgangssignal des Und-Gatters 18 wird im nachfolgenden Text als viertes Taktsignal mit »Clock 4« bezeichnet. Die positiven Flanken des Taktsignals »Clock 4« schieben die M diskreten Schwellwerte $p(t_i)$ in der Darstellung nach Fig. 2 von links nach rechts und von Zelle zu Zelle durch den zyklischen Speicher 19, und zwar so, daß nach Ablauf einer Bitdauer $T_2$ der gleiche Wert wieder die gleiche Zelle belegt. Um dies zu erreichen, wird der in der letzten, in der Darstellung nach Fig. 2 rechten Zelle gespeicherte Wert mit der nächsten positiven Flanke des Uhrensignals »Clock 4« über den Schwellwertausgang 11 und den Schwellwerteingang 9 in die erste, linke Zelle des zyklischen Speichers 19 hineingeschoben. Da die Abtastwerte $d(t_i)$ Analogwerte sind, verwendet man vorteilhafterweise für den zyklischen Speicher 19 ein analoges Schieberegister und für den Komparator 16 einen Analog-Komparator. Die Abtastwerte $d(t_i)$ können jedoch auch mit Hilfe des A/D-Wandlers 17 in k-Bit Digitalwerte umgewandelt werden, so daß ein Digital-Komparator als Komparator 16 und ein digitales Schieberegister, das ein k-Bit Digitalwort pro Zelle enthält als zyklischen Speicher 19 verwendet werden kann. Verwendet man im Digitalfall statt eines Schieberegisters die Schaltung nach Fig. 3, so zählt der n-Bit Zähler 19a die Impulse des Taktsignals »Clock 4«, und der Zählwert dient als digitale n-Bit Adresse für die Speicherzelle des nachgeschalteten Schreib/Lese-Speichers bzw. des nachgeschalteten programmierbaren Festwertspeichers 19b, in welcher der zugehörige digitale k-Bit Schwellwert gespeichert ist. Bedingung dabei ist, daß $M \leq 2^n$ ist. Das zyklische Verhalten des Speichers 19 wird hier nicht durch eine Rückkopplung des Ausganges über den Schwellwertausgang 11 und den Schwellwerteingang 9 erreicht, sondern durch periodische, vom monostabilen Multivibrator 24 herkommende Rückstellimpulse am Ende eines jeden Impulses des Bit-Taktsignals »Clock 2« auf den Rückstelleingang R des n-Bit Zählers 19a.

Am Ausgang des Komparators 16 erscheint eine logische »1«, wenn der momentan geltende Abtastwert $d(t_i)$ größer ist als der zugehörige, im zyklischen Speicher 19 gespeicherte Schwellwert $p(t_i)$.

Im anderen Fall erscheint eine logische »0«. Mit Hilfe des Taktsignals »Clock 4«, des Inverters 20 und des Und-Gatters 21 erscheint die logische »1« am Takteingang des m-Bit Zählers 22 nur während der Impulslücke des Taktsignals »Clock 4«. Im m-Bit Zähler 22 werden diese Impulse gezählt und der digitale m-Bit Zählwert anschließend im Komparator 26 mit dem im m-Bit Speicher 27 gespeicherten Digitalwert M/2 verglichen. Sobald der Zählwert den Wert M/2 überschreitet, erscheint am D-Eingang des D-Flip Flop 23 eine logische »1«, welche durch die nächste positive Flanke des vom Takteingang 7 her eingespeisten Bit-Taktsignals »Clock 2« in den D-Flip Flop 23 eingelesen wird. Am Ausgang des D-Flip Flop 23 und damit auch am Signalausgang 10 des Entzerrers 4 erscheint somit das, allerdings um ein ganzes Bit verzögerte, jedoch ideal rechteckförmige und entzerrte Empfangssignal f(t). Nach Ablauf der Impulsdauer $\tau_2$ löst die negative Flanke eines jeden Impulses des Bit-Taktsignals »Clock 2« mit Hilfe des monostabilen Multivibrators 24 einen kurzen Impuls der Dauer $\tau_4$ aus, welcher den m-Bit Zähler 22 und, falls vorhanden, den n-Bit Zähler 19a auf Null zurückstellt, und zwar, da $\tau_2 + \tau_4\, \tau_4 < \tau_1 - \tau_3$ ist, vor Erscheinen der nächsten Impulslücke des Taktsignals »Clock 4« und damit auch vor Erscheinen des nächsten Impulses am Takteingang des m-Bit Zählers 22.

Wenn die Schwellwertfunktion p(t) unbekannt und/oder von Impulstelegramm zu Impulstelegramm variabel ist, sind die diskreten Schwellwerte $p(t_i)$ a priori unbekannt und müssen fortlaufend den sich ändernden Verhältnissen des Übertragungskanals 2 angepaßt werden. In diesem Fall muß die Schaltung des Entzerrers 4 durch die Erweiterungs-Schaltung 28 ergänzt werden.

Zu Beginn des Impulstelegramms schaltet die positive Flanke des Telegramm-Taktsignals »Clock 3« den zweiten D-Flip Flop 29 auf logisch »1« und damit den Umschalter 30 in Arbeitsposition. In einer ersten Phase wird nun das zu empfangende Impulstelegramm mit den vom letzten Impulstelegramm her noch im ersten zyklischen Speicher 19 gespeicherten diskreten Schwellwerten $p(t_i)$ ausgewertet.

Zu Beginn des Impulstelegramms wird der zweite Speicher 32 mit Hilfe des Telegramm-Taktsignals »Clock 3« auf Null zurückgestellt. Die beiden Speicher 19 und 32 werden parallel betrieben und zu jedem der M diskreten Schwellwerte $p(t_i)$ gehört ein in der zugehörigen Zelle des Speichers 32 gespeicherter digitaler h-Bit Zählwert. Der während der Auswertung jeweils geltende Zählwert ist in der letzten, in der Darstellung nach Fig. 2 rechten Zelle des zweiten Speichers 32 abgespeichert und wird mit Hilfe der Additionsschaltung 33 um Eins inkrementiert, wenn die Auswertung am Ausgang des ersten Komparators 16 eine logische »1« ergibt. Für jeden der M diskreten Schwellwerte $p(t_i)$ wird somit der Häufigkeits-Istwert der Anzahl logischer »1« im Impulstelegramm ermittelt.

Unter der Voraussetzung, daß die Soll-Häufigkeit der logischen »1« im Impulstelegramm bekannt ist, ist dieser Wert als digitaler h-Bit Häufigkeits-Sollwert im h-Bit Speicher 35 abgespeichert. Ist dieser Häufigkeits-Sollwert dagegen unbekannt, so müssen die diskreten Schwellwerte $p(t_i)$ während einer Lernphase zuerst einmal mit Hilfe einer Vorsequenz näherungsweise bestimmt werden, welche bekannt oder deren Häufigkeit logischer »1« zumindestens bekannt ist. Anschließend wird das Impulstelegramm mit diesen Schwellwerten ausgewertet, die Anzahl logischer »1« bestimmt und dieser Wert als Häufigkeits-Sollwert im h-Bit Speicher 35 abgespeichert.

Die Substraktionsschaltung 34 bildet für jeden der M Schwellwerte $p(t_i)$ die Sollwert/Istwert-Differenz der Anzahl logischer »1« und führt sie als digitalen h-Bit Wert über einen h-Bit Bus seriell dem ersten Eingang des Schwellwertrechners 31 zu. Der Schwellwertrechner 31 errechnet fortlaufend an Hand dieses Differenzwertes und des jeweils geltenden, vom Schwellwertausgang 11 dem zweiten Eingang des Schwellwertrechners 31 zugeführten diskreten Schwellwertes $p(t_i)$ den neuen korrigierten Schwellwert.

Die Rechnung erfolgt dermaßen, daß — über die gesamte Dauer $T_3$ des Impulstelegramms gesehen — für jeden neuen Schwellwert getrennt die gleiche Häufigkeit logischer »1« erzielt wird wie für die Bit des Impulstelegramms.

Alle M korrigierten Schwellwerte sind allerdings erst am Ende des Impulstelegramms korrekt und werden daher erst nach Beendigung des Impulstelegramms, in einer zweiten Phase, mit Hilfe des Umschalters 30 vom Ausgang des Schwellwertrechners 31 über den Schwellwerteingang 9 seriell in den ersten zyklischen Speicher 19 hineingeschoben, so daß sie erst nach Ablauf einer Bitdauer $T_2$, d. h. nach M Impulsen des Abtast-Taktsignals »Clock 1«, für das nächste Impulstelegramm zur Verfügung stehen. Um dies zu erreichen, wird am Ende des Impulstelegramms mit Hilfe der positiven Flanke des nächsten Impulses des Telegramm-Taktsignals »Clock 3« der zweite D-Flip Flop 29 wieder auf Null zurückgestellt, so daß der Umschalter 30 wieder in seine Ruheposition zurückkehrt und damit den Ausgang des Schwellwertrechners 31 mit dem Schwellwerteingang 9 verbindet. Verwendet man den digitalen Umschalter 30 nach Fig. 4, so gibt zu Beginn des Impulstelegramms die am Q-Ausgang des zweiten D-Flip Flop 29 erscheinende logische »1« die zweite »Und-Gatter«-Gruppe 37 frei, so daß der an ihrem zweiten Eingang anstehende digitale k-Bit Schwellwert über die »Oder-Gatter«-Gruppe 38 den Ausgang des Umschalters 30 erreicht. Nach Beendigung des Impulstelegramms gibt der $\overline{Q}$-Ausgang des zweiten D-Flip Flop 29 die erste »Und-Gatter«-Gruppe 36 frei, so daß der an ihrem zweiten Eingang anstehende digitale korrigierte k-Bit Schwellwert über die »Oder-Gatter«-Gruppe 38 den Ausgang des Umschalters 30 erreicht. Nur eine der beiden »Und-Gatter«-Gruppen 36 und 37 ist jeweils freigegeben.

Eine weitere Möglichkeit, die Schwellwerte $p(t_i)$ den Verhältnissen des Übertragungskanals 2 anzupassen, besteht darin, alle M.N Abtastwerte des Impulstelegramms in einem zusätzlichen Speicher abzuspeichern und nach Beendigung des Impulstelegramms an Hand dieser Abtastwerte mit Hilfe des Schwellwertrechners 31 die M Schwellwerte $p(t_i)$ so zu berechnen, daß der Häufigkeits-Sollwert logischer »1« für jeden der M Schwellwerte möglichst genau erreicht wird. Mit den so berechneten Schwellwerten werden anschließend die M.N Abtastwerte klassifiziert und ausgewertet.

Zur Realisierung des Schwellwertrechners 31 verwendet man vorteilhafterweise einen Mikrocomputer.

Die bisher beschriebene Funktion gilt unter der Annahme der Verwendung seriell betriebener elektronischer Schaltungen. Es ist möglich, diese Funktion auch mit Hilfe parallel betriebener elektronischer Schaltungen zu realisieren. Diese Lösung ist jedoch in der Regel aufwendiger.

## Patentansprüche

1. Verfahren zur Entzerrung eines aus einem binären Impulstelegramm bestehenden Empfangssignals [d(t)] mit Hilfe eines Schwellwertvergleichs, dadurch gekennzeichnet, daß die Empfangsbit jeweils mehrmals innerhalb einer Bitdauer ($T_2$) mit einem während dieser Bitdauer ($T_2$) zeitvariablen Schwellwert verglichen werden.

2. Verfahren nach Anspruch 1, dadurch gekennzeichnet, daß für alle Bit des Impulstelegramms die gleiche Schwellwertfunktion [p(t)] verwendet wird.

3. Verfahren nach Anspruch 1 oder 2, dadurch gekennzeichnet, daß die Schwellwertfunktion innerhalb einer Bitdauer ($T_2$) aus einer ganzzahligen Reihe diskreter Schwellwerte [$p(t_i)$] und das zu vergleichende Empfangssignal aus der gleichen Anzahl (M) diskreter Abtastwerte [$D(T_I)$] besteht.

4. Verfahren nach Anspruch 3, dadurch gekennzeichnet, daß ein empfangenes Bit den Wert logisch »1« erhält, wenn mehr als die Hälfte der M Schwellwertvergleiche des Bit eine logische »1« ergeben.

5. Verfahren nach Anspruch 3 oder 4, dadurch gekennzeichnet, daß die Schwellwerte so gewählt sind, daß die Schwellwertvergleiche über die gesamte Dauer des Impulstelegramms für jeden Schwellwert die gleiche Häufigkeit logischer »1« ergeben wie diejenige, welche die Bit des Impulstelegramms selber besitzen.

6. Verfahren nach Anspruch 5, dadurch gekennzeichnet, daß mit Hilfe eines zweiten zyklischen Speichers (32) und einer Additionsschaltung (33) für jeden diskreten Schwellwert [$p(t_i)$] getrennt fortlaufend die Häufigkeit logischer »1« ermittelt wird und nach Beendigung des Impulstelegramms die an Hand der verwendeten Schwellwerte und der gefundenen Sollwert/Istwert-Häufigkeitsdifferenzen mit Hilfe eines Schwellwertrechners (31) errechneten, korrigierten neuen Schwellwerte für das nächste Impulstelegramm in einem ersten zyklischen Speicher (19) gespeichert werden, wobei die Rechnung für jeden neuen Schwellwert getrennt eine möglichst kleine Sollwert/Istwert-Häufigkeitsdifferenz anstrebt.

7. Verfahren nach Anspruch 5, dadurch gekennzeichnet, daß am Ende des Impulstelegramms alle diskreten Abtastwerte des Impulstelegramms in einem zusätzlichen Speicher gespeichert werden, daß mit Hilfe eines Schwellwertrechners (31) die neuen korrigierten Schwellwerte so berechnet werden, daß eine mit diesen neuen Schwellwerten berechnete Häufigkeit logischer »1« für jeden Schwellwert die Häufigkeit logischer »1« des Impulstelegramms möglichst genau erreicht und daß die neuen Schwellwerte in einem ersten zyklischen Speicher (19) gespeichert werden.

8. Verfahren nach einem der Ansprüche 5 bis 7, dadurch gekennzeichnet, daß bei unbekannter Soll-Häufigkeit der logischen »1« des Impulstelegramms mittels einer Vorsequenz, welche bekannt oder deren Häufigkeit logischer »1« bekannt ist, zuerst näherungsweise die diskreten Schwellwerte [$p(t_i)$] bestimmt werden und anschließend durch die Auswertung des Impulstelegramms mit diesen Schwellwerten [($p(t_i)$] die Häufigkeit logischer »1« des Impulstelegramms ermittelt wird.

9. Einrichtung zur Entzerrung eines aus einem binären Impulstelegramm bestehenden Empfangssignals [d(t)], welche einen ersten Komparator (16) und eine Abtast/Halte-Schaltung (15) enthält, dadurch gekennzeichnet, daß die Abtast/Halte-Schaltung (15) das Empfangssignal [(d(t)] während einer Bitdauer ($T_2$) M-fach abtastet und ein erster zyklischer Speicher (19) M verschiedene Schwellwerte [$p(t_i)$] speichert und daß ein m-Bit Zähler (22) die Anzahl logischer »1« pro Bitdauer ($T_2$) zählt, ein

7

zweiter Komparator (26) den Zählwert mit einem Wert M/2 vergleicht und ein m-Bit Speicher (27) den Digitalwert von M/2 speichert.

10. Einrichtung nach Anspruch 9, dadurch gekennzeichnet, daß der erste zyklische Speicher (19) aus einer Kombination eines n-Bit Zählers (19a) mit einem programmierbaren Festwertspeicher (19b) bzw. einem Schreib/Lese-Speicher besteht.

11. Einrichtung nach Anspruch 9, dadurch gekennzeichnet, daß der erste zyklische Speicher (19) aus mehreren digitalen oder einem analogen Schieberegister besteht.

12. Einrichtung nach einem der Ansprüche 9 bis 11, gekennzeichnet durch das zusätzliche Vorhandensein einer Erweiterungs-Schaltung (28), bestehend aus einem Umschalter (30) zum Umschalten von Empfangsbetrieb auf Schwellwert-Korrekturbetrieb, einem zweiten D-Flip Flop (29) zum Steuern des Umschalters (30), einem Schwellwertrechner (31) zum Errechnen der korrigierten Schwellwerte, einem digitalen zweiten zyklischen Speicher (32) zur getrennten Abspeicherung der Anzahl der für jeden Schwellwert $[p(t_i)]$ erhaltenen logischen »1«, einer Additionsschaltung (33) zum Inkrementieren der Häufigkeitswerte der pro Schwellwert $[p(t_i)$ erhaltenen logischen »1«, einem h-Bit Speicher (35) zum Abspeichern eines Häufigkeits-Sollwertes und einer Subtraktionsschaltung (34) zur Bildung der Sollwert/Istwert-Häufigkeitsdifferenz.

13. Verfahren bzw. Einrichtung nach einem der Ansprüche 6, 7 und 12, dadurch gekennzeichnet, daß der Schwellwertrechner (31) ein Mikrocomputer ist.

## Claims

1. A method of correcting distortion of a received signal $[d(t)]$ comprising a binary pulse telegram, by means of a threshold comparison operation, characterised in that the received bits are each compared a plurality of times within a bit duration $(t_2)$ with a threshold value which is time-variable during said bit duration $(T_2)$.

2. A method according to claim 1 characterised in that the same threshold function $[p(t)]$ is used for all bits of the pulse telegram.

3. A method according to claim 1 or claim 2 characterised in that the threshold function within a bit duration $(T_2)$ comprises an integral series of discrete threshold values $[p(t_i)]$ and the received signal to be compared comprises the same number (M) of discrete sampling values $[d(t_i)]$.

4. A method according to claim 3 characterised in that a received bit receives the value logic '1' if more than half of the M threshold comparison operations of the bit give a logic 'I'.

5. A method according to claim 3 or claim 4 characterised in that the threshold values are so selected that the threshold value comparison operations, over the entire duration of the pulse telegram, give for each threshold value the same frequency of logic '1' as that of the bits of the pulse telegram itself.

6. a method according to claim 5 characterised in that the frequence of logic '1' is continuously determined separately for each discrete threshold value $[p(t_i)]$, by means of a second cyclic memory (32) and an addition circuit (33), and, after termination of the pulse telegram, the corrected new threshold values which are computed by means of the threshold values used and the reference value/actual value frequency differences found, by means of a threshold value computing means (31), are stored for the next pulse telegram in a first cyclic memory (19), wherein the computation for each new threshold value aims separately at a minimum reference value/actual value frequency difference.

7. A method according to claim 5 characterised in that at the end of the pulse telegram, all discrete sampling values of the pulse telegram are stored in an additional memory, that the new corrected threshold values are computed by means of a threshold value computing means (31) in such a way that a frequency of logic '1', for each threshold value, said frequency being computed with said new threshold values, reaches the frequency of logic '1' of the pulse telegram with the maximum degree of accuracy, and that the new threshold values are stored in a first cyclic memory (19).

8. A method according to one claims 5 to 7 characterised in that with the reference frequency of the logic '1' of the pulse telegram being unknown, the discrete threshold values $[p(t_i)]$ are first approximately determined by means of a pre-sequence which is known or the frequency of logic '1' of which is known, and then the frequency of logic '1' of the pulse telegram is determined by evaluating the pulse telegram with said threshold values $[p(t_i)]$.

9. Apparatus for correcting distortion of a received signal $[d(t)]$ comprising a binary pulse telegram, which includes a first comparator (16) and a sample and hold circuit (15), characterised in that the sample and hold circuit (15) samples the received signal $[d(t)]$ M times during a bit duration $(T_2)$ and a first cyclic memory (19) stores M different threshold values $[p(t_i)]$ and that an m-bit counter (22) counts the number of logic '1' per bit duration $(T_2)$, a second comporator (26) compares the count value to a value M/2 and an m-bit memory (27) stores the digital value of M/2.

10. Apparatus according to claim 9 characterised in that the first cyclic memory (19) comprises a combination of a n-bit counter (19a) with a programmable read only memory (19b) or a random access memory.

11. Apparatus according to claim 9 characterised in that the first cyclic memory (19) comprises a plurality of digital or an analog shift register.

12. Apparatus according to one of claims 9 to 11 characterised by the additional provision of an expansion circuit (28) comprising a change-over switch (30) for switching over from receiving mode to threshold value correction mode, a second D-type flip-flop (29) for controlling the change-over switch (30), a threshold value computing means (31) for computing the corrected threshold values, a digital second cyclic memory (32) for separately storing the number of logic '1' contained for each threshold value [p(t$_i$)], an addition circuit (33) for incrementing the frequency values of the logic '1' contained for each threshold value [p(t$_i$)], an h-bit memory (35) for storing a frequency reference value and a subtraction circuit (34) for forming the reference value/actual value frequency difference.

13. A method or an apparatus according to one of claims 6, 7 and 12 characterised in that the threshold value computing means (31) is a microcomputer.

## Revendications

1. Procédé pour l'égalisation d'un signal de réception [d(t)] se composant d'un télégramme f'impulsions binaire au moyen d'une comparaison de valeur de seuil, caractérisé en ce que les bits reçus sont à chaque fois comparés plusieurs fois pendant une durée de bits (T$_2$) àvec une valeur de seuil variable temporellement pendant cette durée de bits (T$_2$).

2. Procédé selon la revendication 1, caractérisé en ce que la même fonction de valeur de seuil [p(t)] est utilisée pour tous les bits du télégramme d'impulsions.

3. Procédé selon la revendication 1 ou 2, caractérisé en ce que la function de valeur de seuil se compose à l'intérieur d'une durée de bits (T$_2$) d'une série entière de valeurs de seuil discrètes [p(t$_i$)] et en ce que le signal de réception à comparer se compose du même nombre (M) de valeurs d'analyse discrètes [d(t$_i$)].

4. Procédé selon la revendication 3, caractérisé en ce qu'un bit reçu prend la valeur logique »1« lorsque plus de la moitié des M comparaisons de valeurs de seuil du bit produisent un »1« logique.

5. Procédé selon la revendication 3 ou 4, caractérisé en ce que les valeurs de seuil sont choisies de manière que les comparaisons de valeurs de seuil produisent pendant toute la durée du télégramme d'impulsions et pour chaque valeur de seuil la même périodicité de »1« logique que celle correspondant aux bits du télégramme d'impulsions proprement dit.

6. Procédé selon la revendication 5, caractérisé en ce que, au moyen d'une seconde mémoire cyclique (32) et d'un cirecuit d'addition (33), on détermine séparément pour chaque valeur de seuil discrète [p(t$_i$)] progressivement la périodicité de »1« logiques et, après terminaison du télégramme d'impulsions, on mémorise pour le télégramme d'impulsions suivant, dans une première mémoire cyclique (19), les nouvelles valours de seuil corrigées qui ont été calculées à l'aide des valeurs de seuil utilisées et des différence trouvées entre la valeur imposée et la valeur rélle de périodicité au moyen d'un calculateur de valeur de seuil (31), le calcul s'efforçant d'obtenir, séparément pour chaque nouvelle valeur de seuil, une différence aussi petite que possible entre la valeur imposée et la valeur réelle de périodicité.

7. Procédé selon la revendication 5, caractérisé en ce que, à la fin du télégramme d'impulsions, toutes les valeurs d'analyse discrètes du télégramme d'impulsions sont mémorisées dans une mémoire supplémentaire, en ce qu'au moyen d'un calculateur de valeur de seuil (31) les nouvelles valeurs de seuil corrigées sont calculées de telle sorte que, pour chaque valeur de seuil, une périodicité de »1« logiques calculée avec ces nouvelles valeurs de seuil atteignent d'une façon aussi exacte que possible la périodicité des »1« logiques du télégramme d'impulsions et en ce que les nouvelles valeurs de seuil sont mémorisées dans une première mèmoire cyclique (19).

8. Procédé selon l'une des revendications 5 à 7, caractérisé en ce que, dans le cas d'une valeur imposée inconnue de périodicité des »1« logiques du télégramme d'impulsions, on détermine initialement de façon approximative les valeurs de seuil discrètes [p(t$_i$) au moyen d'une pré-séquence, qui est connue ou dont la périodicité de »1« logiques est connue, et ensuite on détermine par l'évaluation du télégramme d'impulsions avec ces valeurs de seuil [p(t$_i$)] la périodicité de »1« logiques du télégramme d'impulsions.

9. Dispositif pour l'égalisation d'un signal de réception [d(t)] se composant d'un télégramme d'impulsions binaire, qui contient un premier comparateur (16) et un circuit d'analyse/maintien (15), caractérisé en ce que le circuit d'analyse/maintien (15) analyse M fois le signal de réception [d(t)] pendant une durée de bits (T$_2$) et une première mémoire cyclique (19) mémorise M valeurs de seuil différentes [p(t$_i$)] et en ce qu'un compteur de m-bits (22) compte le nombre de »1« logiques par durée de bits (T$_2$), un second comparateur (26) compare la valeur de compte avec valeur M/2 et une mémoire de m-bits (27) mémorise la valeur numérique de M/2.

10. Dispositif selon la revendication 9, caractérisé en ce que la première mémoire cyclique (19) se compose d'une combinaison d'un compteur de n-bits (19a) avec une mémoire fixe programmable (19b) ou une mémoire d'écriture/lecture.

11. Dispositif selon la revendication 9, caractérisé en ce que la première mémoire cyclique (19) se compose de plusieurs registres à décalage numériques ou d'un registre à décalage analogique.

12. Dispositif selon une des revendications 9 à 11, caractérisé par la présence additionnelle d'un circuit d'extension (28), se composant d'un commutateur (30) pour une commutation d'un mode de réception à un mode de correction avec de seuil, d'une seconde bascule-D (29) pour commander le commutateur (30), d'un calculateur de valeur de seuil (31) pour calculer la valeur de seuil corrigée, d'une seconde mémoire cyclique numérique (32) pour une mémorisation séparée de nombre de »1« logiques obtenus pour chaque valeur de seuil [$p(t_i)$], d'un circuit d'addition (33) pour l'incrémentation des valeurs de périodicité des »l« logiques obtenus par valeur de seuil [$p(t_i)$], d'une mémoire de h-bits (35) pour la mémorisation d'une valeur imposée de périodicité et d'un circuit de soustraction (34) pour établir la différence entre une valeur imposée et une valeur réelle de périodicité.

13. Procédé ou dispositif selon l'une des revendications 6, 7 et 12, caractérisé en ce que le calculateur de valeur de seuil (31) est un microprocesseur.

# Fig. 1

n(t)

s(t) → e(t) →

1   2   3

# Fig. 3

19a        19

1 →        1 →
n          k

R

⇉ : Bus

# Fig. 4

1   2   k

38        37    30

1
2
k

36

1   2   k

# Fig. 2

: Bus

: In Digital Version: k—Bit Bus

Fig. 5

0 051 141

15